# FASCICULE DE BREVET EUROPEEN

(11) **EP 1 769 186 B1**
(45) Date de publication et mention de la délivrance du brevet: **27.07.2011**
(21) Numéro de dépôt: 05791054.9
(22) Date de dépôt: 12.07.2005
(51) Int. Cl.: F16L 37/091

(54) **CARTOUCHE D' IMPLANTATION POUR UN RACCORD DE TUYAU DESTINE A PRENDRE PLACE DANS UN LOGEMENT**
IMPLANTATIONSKARTUSCHE FÜR EINE ZUR INSTALLATION IN EINEM GEHÄUSE ENTWICKELTE ROHRVERBINDUNG
IMPLANTATION CARTRIDGE FOR A PIPE CONNECTION DESIGNED TO BE FITTED IN A HOUSING

(30) Priorité: 19.07.2004 FR 0407970
(43) Date de publication de la demande: 04.04.2007
(73) Titulaire: Parker Hannifin France S.A.S., 74100 Annemasse (FR)
(72) Inventeur: ANTHOINE, Bernard, F-74100 Vetraz Monthoux (FR)
(74) Mandataire: Maureau, Philippe
(86) Numéro de dépôt international: PCT/FR2005/001803
(87) Numéro de publication internationale: WO 2006/016066

(56) Documents cités:
- EP-A- 0 272 988
- FR-A- 2 758 379
- US-A- 6 145 887
- US-A1- 2002 140 226

## Description

La présente invention concerne une cartouche d'implantation pour un raccord de tuyau, par exemple un raccord pneumatique, destiné à prendre place dans un logement, par exemple dans une paroi de machine, dans une platine de raccordement ou bien dans un vérin pneumatique.

A titre d'exemple, on peut citer le brevet français n° 2 758 379 qui décrit une cartouche d'implantation comportant
- un corps de forme générale cylindrique, avec une première ouverture reliée à un conduit, et muni de dents élastiques s'étendant radialement vers l'extérieur, inclinées par rapport à un plan radial vers une seconde ouverture prévue pour l'introduction d'un tuyau à raccorder, et destinées à être disposées de préférence au fond du logement; et
- un raccord instantané pour raccorder le tuyau à la cartouche, comprenant un anneau élastique, avec des dents s'étendant radialement vers l'intérieur, venant en appui contre un épaulement ménagé à l'intérieur du corps de cartouche, une bague destinée à maintenir l'anneau élastique en position, un joint d'étanchéité pour assurer l'étanchéité entre la surface extérieure du tuyau à raccorder et la surface intérieure du corps de la cartouche, et un bouton poussoir mobile axialement et destiné à agir sur les dents de l'anneau élastique afin de pouvoir libérer un tuyau maintenu dans le raccord.

La cartouche comporte ainsi un système très fiable d'ancrage dans un logement réalisé indifféremment dans un matériau synthétique ou dans un métal. D'autre part, un retrait du tuyau par simple traction dans le sens axial sur celui-ci n'est pas possible, car les dents de l'anneau élastique sont ancrées dans le tuyau et lorsqu'une telle traction est exercée, ces dents s'arc-boutent. Seul le bouton poussoir permet d'agir sur les dents de l'anneau élastique afin de dégager le tuyau de leur emprise et autoriser le retrait de celui-ci.

Cette dernière fonction de retrait du tuyau nécessite toutefois d'être neutralisée pour des raisons de sécurité, lorsque le raccord a vocation à devenir permanent.

La présente invention a donc pour but de résoudre ce problème en fournissant une cartouche d'implantation pour un raccord de tuyau du genre décrit ci-avant et comportant des moyens pour empêcher tout retrait du tuyau à connecter et rendre par conséquent le raccord permanent, tout en permettant, en cas de besoin, le retrait de la cartouche hors de son logement, sans abimer le support dans lequel est ménagé le logement.

A cette fin, l'invention a pour objet un ensemble pour le raccordement d'un tuyau à une extrémité d'un conduit formant un logement, comprenant un logement, une cartouche d'implantation pour un raccord de tuyau destiné à prendre place dans le logement, cette cartouche comportant
- un corps de forme générale cylindrique, avec une première ouverture reliée à un conduit, et muni de dents élastiques s'étendant radialement vers l'extérieur, inclinées par rapport à un plan radial vers une seconde ouverture prévue pour l'introduction d'un tuyau à raccorder, et destinées à être disposées de préférence au fond du logement; et
- un raccord instantané pour raccorder le tuyau à la cartouche, comprenant un anneau élastique, avec des dents s'étendant radialement vers l'intérieur, venant en appui contre un épaulement ménagé à l'intérieur du corps de cartouche , une bague destinée à maintenir l'anneau élastique en position, un joint d'étanchéité pour assurer l'étanchéité entre la surface extérieure du tuyau à raccorder et la surface intérieure du corps de cartouche, et un bouton poussoir mobile axialement et destiné à agir sur les dents de l'anneau élastique afin de pouvoir libérer un tuyau maintenu dans le raccord, caractérisée en ce que
- l'entrée du logement présente une bordure annulaire prévue pour former, en position de fin de connexion du tuyau, dans une position d'enfoncement intermédiaire de la cartouche dans son logement, une butée de fin de course axiale du bouton-poussoir de manière à rendre irréversible le montage du raccord du tuyau vis-à-vis de la cartouche,
- le logement présente un épaulement annulaire prévue pour former, dans une position d'enfoncement ultime de la cartouche dans son logement, une butée de fin de course du corps de cartouche, de sorte qu'une arête vive dudit épaulement vienne en appui au niveau de la base des dents élastiques, de telle sorte que, lorsqu'un seuil prédéterminé de poussée axialement exercée au niveau de la base des dents élastiques par cette arête vive est atteint, les dents élastiques se déforment de manière plastique et irréversible de façon à accroître leur inclinaison vers ladite seconde ouverture et à ne plus s'opposer au retrait de la cartouche hors du logement, et
- la section transversale du logement est invariable depuis l'entrée du logement jusqu'à l'épaulement annulaire formant butée de fin de course du corps de cartouche.

Ainsi, en deçà d'une position d'enfoncement intermédiaire de la cartouche dans son logement, le raccord du tuyau à la cartouche est, dans un premier mode de fonctionnement de la cartouche, démontable par action sur le bouton-poussoir.

En revanche, dès que cette position d'enfoncement intermédiaire est atteinte, le bouton-poussoir bute contre une bordure annulaire ménagée à l'entrée du logement de cartouche et ne peut alors plus agir sur l'anneau élastique de retenue du tuyau. Cette neutralisation du bouton-poussoir est irréversible car les dents élastiques empêchent tout retrait de la cartouche hors de son logement. Dans ce deuxième mode de fonctionnement de la cartouche, le raccord du tuyau à la cartouche est rendu permanent.

Le bouton-poussoir possède avantageusement une tête élargie de manière à disposer d'une surface de contact suffisante avec la bordure à l'entrée du logement. Toutefois, la surface de contact entre le bouton-poussoir et la bordure d'entrée du logement peut être minime sans pour autant affecter le fonctionnement de la cartouche.

Pour démonter la cartouche, l'opérateur exerce une forte poussée axiale sur la cartouche, en direction du fond du logement. En réaction, l'arête vive de l'épaulement annulaire du logement exerce une contre-poussée axiale contre la base des dents élastiques, ce qui les déforme de façon plastique et permanente. Une fois les dents élastiques ainsi déformées, leur ancrage sur la paroi intérieure du logement disparaît, et il est possible de retirer la cartouche hors du logement.

Les dents élastiques sont avantageusement cambrées de manière à former un tronc de cône et fixées sur une extrémité en forme de tronc de cône du corps de cartouche, de manière à former un angle de débattement d'environ 15 à 20° entre les dents élastiques et ladite extrémité en tronc de cône du corps de cartouche.

Ce débattement assure que la déformation irréversible des dents élastiques, sous la contre-poussée de l'arête vive de l'épaulement annulaire du logement, soit suffisante pour que l'inclinaison des dents permette le retrait de la cartouche.

Les dents élastiques sont par exemple les dents d'une rondelle élastique fixée, par exemple par encliquetage ou sertissage, sur le corps de cartouche. Dans ce cas, le corps de la cartouche est réalisé de préférence en matière synthétique et la rondelle élastique est avantageusement métallique, par exemple en acier à ressort.

L'invention concerne également une platine munie d'au moins un puits servant de logement à une cartouche telle que décrite plus haut, ainsi qu'un vérin pneumatique muni d'une telle cartouche.

De toute façon, l'invention sera bien comprise à l'aide de la description qui suit, en référence au dessin schématique annexé représentant un exemple de réalisation d'une cartouche d'implantation selon l'invention, et sur lequel dessin :
- la figure 1 est une vue en coupe longitudinale d'une cartouche selon l'invention dans une première position dans un logement;
- la figure 2 est une vue similaire à la Figure 1 dans une position d'enfoncement intermédiaire de la cartouche dans son logement;
- la figure 3 est une vue de dessus d'une rondelle élastique utilisée pour la cartouche des figures précédentes;
- la figure 4 est une vue similaire aux figures 1 et 2 de la cartouche dans une position d'enfoncement ultime et dans une configuration permettant le démontage de la cartouche hors de son logement.

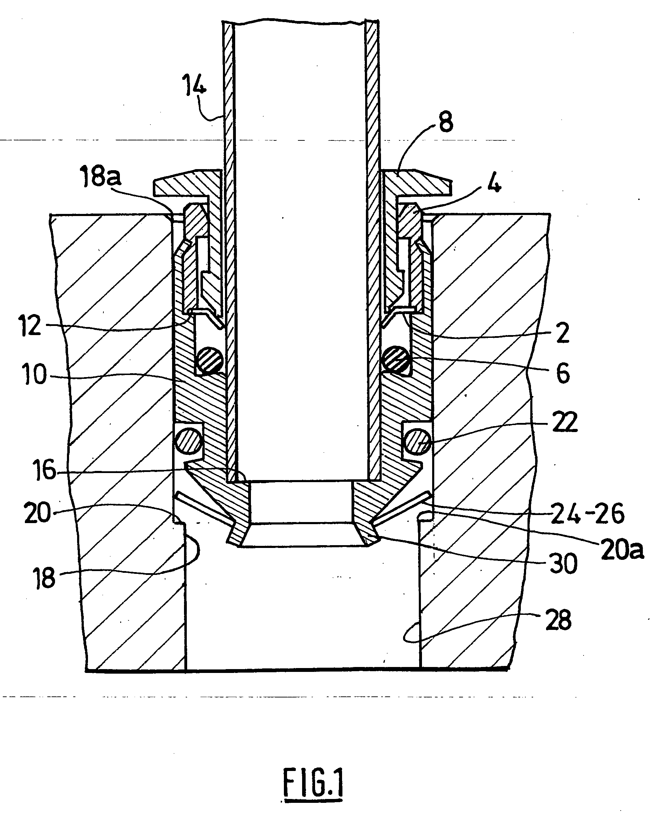

Comme indiqué en figure 1, la cartouche d'implantation selon l'invention est placée dans un logement 18, réalisé par exemple dans une paroi de machine, dans une platine de raccordement ou bien dans un vérin pneumatique. Le logement 18 est l'extrémité d'un conduit 28 destiné à être raccordé avec le tuyau 14. Ce conduit 28 peut par exemple être en liaison avec une source d'air comprimé ou bien une chambre de vérin.

La cartouche proprement dite comporte une douille 10 en laiton constituant le corps de la cartouche, un joint d'étanchéité 22 en nitrile et une rondelle élastique 24 en acier inoxydable et munie de dents 26.

Le joint d'étanchéité 22 est logé dans une gorge annulaire réalisée dans la surface extérieure de la douille 10. Il permet de réaliser l'étanchéité entre la douille 10 et la paroi intérieure du logement 18.

La douille 10 est de forme globalement cylindrique circulaire. Elle est ouverte à ses deux extrémités. Une première ouverture est destinée à recevoir le tuyau à raccorder 14 tandis que la seconde ouverture est située du côté du conduit 28, c'est à dire du côté du fond du logement 18.

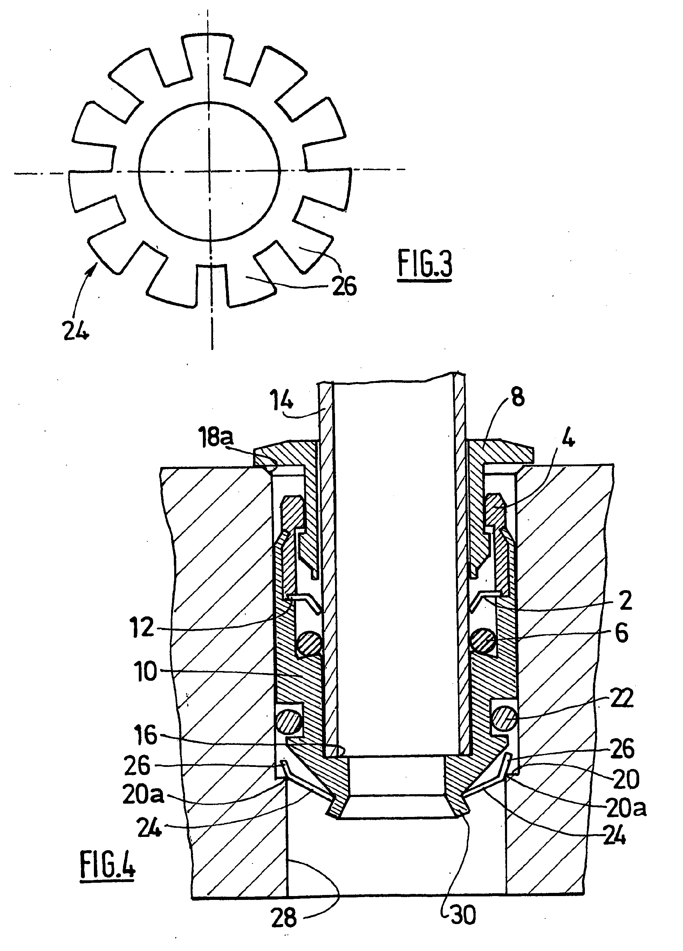

La rondelle élastique 24 est représentée en vue de dessus sur la figure 3. Elle est d'épaisseur comprise entre 0,2 et 0,3 mm afin de garantir une bonne tenue en traction. La rondelle élastique 24 est fixée sur une extrémité en forme de tronc de cône du corps de cartouche 10 du côté de la seconde ouverture; en position montée, elle se trouve donc au fond du logement 18.

La rondelle élastique 24 est cambrée de manière à se présenter sous la forme d'un tronc de cône, l'angle de cambrage étant de l'ordre de 30 à 36° par rapport au plan radial. L'extrémité en tronc de cône du corps de cartouche 10 et la rondelle 24 forment, de par leur différence d'inclinaisons, un angle de débattement d'environ 15 à 20°.

La douille 10 présente une saillie tubulaire 30 du côté du fond du logement 18 sur laquelle est positionnée la rondelle 24. Pour rendre la rondelle solidaire de la douille 10, la paroi de la saillie 30 est évasée de telle sorte que la rondelle 24 ne puisse plus quitter la saillie 30.

Au cas où la douille 10 serait réalisée dans un matériau présentant une bonne élasticité, par exemple une matière synthétique, il est également envisageable que la rondelle 24 soit encliquetée sur une saillie annulaire de la douille, ladite saillie étant surmontée d'une nervure annulaire de diamètre extérieur légèrement supérieur au diamètre intérieur de la rondelle 24.

Les dents 26 s'étendent radialement et présentent une forme évasée vers l'extérieur. Lorsque la rondelle 24 est montée, les dents 26 sont orientées vers l'ouverture de la douille 10 destinée à recevoir le tuyau à raccorder 14. Le diamètre extérieur de la rondelle 24, avec les dents en position de repos, est supérieur au diamètre du logement 18 et au diamètre extérieur de la douille 10.

Lorsque la douille 10 est introduite dans le logement 18, les dents 26 s'inclinent alors plus par rapport au plan radial. Une fois dans le logement 18, un phénomène d'ancrage est créé. Il n'est pas possible de retirer la cartouche, car en tirant sur celle-ci pour l'extraire de son logement 18, les dents 26 s'arc-boutent et empêchent tout mouvement.

Un dispositif de raccord instantané se trouve de préférence du côté de la première ouverture de la douille 10. Il comporte un anneau élastique 2 présentant des dents s'étendant radialement vers l'intérieur de l'anneau, une bague 4 sertie ou encliquetée (d'autres modes de fixation, par exemple le vissage, sont également envisageables), un joint d'étanchéité 6 et un bouton poussoir 8 en acétal, ces éléments 2 à 8 étant montés dans la douille 10 constituant le corps de la cartouche.

Le joint d'étanchéité 6 vient en appui sur un épaulement ménagé dans la douille 10. L'anneau élastique 2 comporte un rebord annulaire 12 qui repose sur un second épaulement intérieur de la douille 10. La bague 4 maintient le rebord annulaire 12 en contact avec l'épaulement correspondant.

Lorsqu'un tuyau à raccorder 14, en matière synthétique telle un polyamide, polyuréthane, polyéthylène, etc, ou en métal, est introduit dans le raccord, il pousse les dents de l'anneau élastique 2, qui sont inclinées pour permettre une telle introduction. Le tuyau à raccorder 14 vient en butée contre un troisième épaulement intérieur 16 de la douille 10.

un retrait du tuyau 14 par simple traction dans le sens axial sur celui-ci n'est pas possible, car les dents de l'anneau élastique 2 sont ancrées dans le tuyau et lorsqu'une telle traction est exercée, ces dents s'arc-boutent, empêchant le retrait du tuyau 14. Le bouton poussoir 8 permet d'agir sur les dents de l'anneau élastique 2 afin de dégager le tuyau 14 de leur prise et autoriser le retrait de celui-ci.

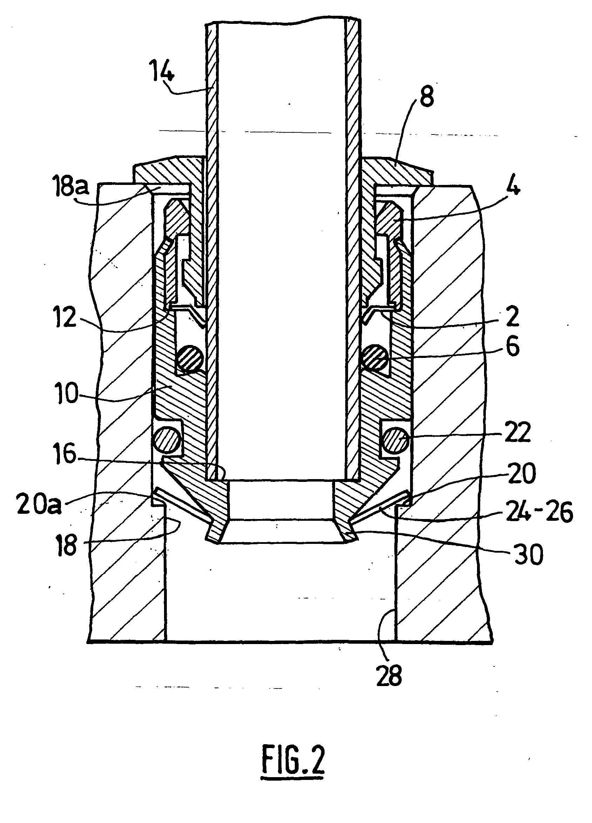

La figure 2 représente la cartouche dans une position d'enfoncement intermédiaire de la cartouche dans son logement 18.

L'entrée du logement 18 présente une bordure annulaire 18a qui, dans cette position d'enfoncement intermédiaire, forme une butée de fin de course axiale du bouton-poussoir 8. Le bouton-poussoir 8 possède une tête élargie de manière à disposer d'une surface de contact suffisante avec la bordure 18a, ici chanfreinéé pour faciliter l'introduction de la cartouche dans le logement 18.

Le bouton-poussoir 8 est neutralisé et ne peut alors plus agir sur les dents de l'anneau élastique 2 pour dégager le tuyau 14 de leur emprise. Le raccord du tuyau 14 à la cartouche est permanent et irréversible.

En revanche, dès que cette position d'enfoncement intermédiaire est atteinte, le bouton-poussoir bute contre une bordure annulaire ménagée à l'entrée du logement de cartouche et. Cette du bouton-poussoir est irréversible car les dents élastiques empêchent tout retrait de la cartouche hors de son logement. Dans ce deuxième mode de fonctionnement de la cartouche, le raccord du tuyau à la cartouche est rendu permanent.

Ainsi, la cartouche selon l'invention permet, dans un premier mode de fonctionnement, de réaliser un raccord démontable (voir figure 1), amovible par action sur le bouton-poussoir 8, lorsque sa course axiale en direction de l'anneau 2 est libre, c'est-à-dire quand la position d'enfoncement intermédiaire de la cartouche dans son logement 18 n'est pas encore atteinte.

Lorsque cette position d'enfoncement intermédiaire est atteinte, le raccord du tuyau 14 à la cartouche devient permanent (voir figure 2), car le bouton-poussoir 8 est neutralisé.

Le passage du premier (raccord démontable) au second mode de de fonctionnement (raccord permanent) de la cartouche est réalisé très simplement, sans recourir à un quelconque organe additionnel de neutralisation du bouton-poussoir 8.

L'invention permet également de démonter la cartouche hors de son logement 18 sans abîmer la paroi, platine ou le vérin dans lequel est ménagé le logement 18.

A cet effet, un épaulement annulaire 20 est prévu dans le logement 18 pour former une butée de fin de course de la douille 10 et définit ainsi une position d'enfoncement ultime de la cartouche dans son logement 18.

La section transversale du logement 18 est invariable depuis l'entrée du logement 18 jusqu'à cet épaulement annulaire 20 formant butée d'enfoncement.

Dans la position d'enfoncement ultime de la cartouche, une arête vive 20a de l'épaulement 20 vient en appui contre la base des dents élastiques 26.

Sous l'effet d'une poussée axiale suffisamment forte au niveau de la base des dents élastiques 26 de la rondelle 24, ces dernières sont aptes à se déformer de manière plastique et irréversible de façon à accroître leur inclinaison vers l'ouverture de la douille 10 destinée à recevoir le tuyau à raccorder 14. Le débattement angulaire prévu entre la rondelle 24 et le corps de cartouche 10 autorise cette déformation.

Pour démonter la cartouche, l'opérateur exerce une forte poussée axiale sur la cartouche, en direction du fond du logement 18. Cette poussée se répercute au niveau de la base des dents élastiques 26, par l'intermédiaire de l'arête vive 20a de l'épaulement annulaire 20 du logement 18.

Lorsque cette poussée atteint un seuil prédéterminé, par exemple environ 400 N. (c'est-à-dire très supérieur à la force nécessaire pour enfoncer la cartouche dans son logement 18 lors de son montage qui est par exemple d'environ 80 N.), les dents élastiques 26 se déforment et se replient vers l'intérieur de manière plastique et permanente (voir figure 4).

Une fois les dents élastiques 26 ainsi déformées, leur ancrage sur la paroi intérieure du logement 18 disparaît, et il est possible de retirer la cartouche hors du logement 18. Il suffit alors de remplacer la rondelle 24 usagée par une nouvelle rondelle élastique afin de pouvoir réutiliser la cartouche.

Ainsi, même si le raccord entre le tuyau 14 et la cartouche est permanent, il est possible de démonter la cartouche hors de son logement de manière (faiblement) destructive, ce qui définit en quelque sorte un troisième mode de fonctionnement de la cartouche selon l'invention.

Comme il va de soi, on ne s'éloignerait notamment pas du cadre de l'invention, tel que défini dans les revendications annexées :
- en utilisant le même principe de montage pour un bouchon destiné à fermer un orifice d'une machine pneumatique ou d'une platine de raccordement;
- en remplaçant la rondelle élastique par des dents emboîtées chacune dans le corps de la cartouche, par exemple au niveau d'une gorge annulaire périphérique;
- en prévoyant, dans le cas d'une pièce moulée, que les dents élastiques fassent partie intégrante du corps de la cartouche et ne forme qu'une seule pièce avec celui-ci.

## Revendications

1. Ensemble pour le raccordement d'un tuyau (14) à une extrémité d'un conduit formant un logement (18), comprenant un logement (18), une cartouche d'implantation pour un raccord de tuyau destiné à prendre place dans le logement (18), cette cartouche comportant
- un corps (10) de forme générale cylindrique, avec une première ouverture reliée à un conduit (28), et muni de dents élastiques (26) s'étendant radialement vers l'extérieur, inclinées par rapport à un plan radial vers une seconde ouverture prévue pour l'introduction d'un tuyau à raccorder (14), et destinées à être disposées de préférence au fond du logement (18) ; et
- un raccord instantané pour raccorder le tuyau (14) à la cartouche, comprenant un anneau élastique (2), avec des dents s'étendant radialement vers l'intérieur, venant en appui contre un épaulement ménagé à l'intérieur du corps de cartouche (10), une bague (4) destinée à maintenir l'anneau élastique (2) en position, un joint d'étanchéité (6) pour assurer l'étanchéité entre la surface extérieure du tuyau à raccorder (14) et la surface intérieure du corps de cartouche (10), et un bouton poussoir (8) mobile axialement et destiné à agir sur les dents de l'anneau élastique (2) afin de pouvoir libérer un tuyau (14) maintenu dans le raccord, **caractérisée en ce que**
- l'entrée du logement (18) présente une bordure annulaire (18a) prévue pour former, en position de fin de connexion du tuyau (14), dans une position d'enfoncement intermédiaire de la cartouche dans son logement (18), une butée de fin de course axiale du bouton-poussoir (8) de manière à rendre irréversible le montage du raccord du tuyau (14) vis-à-vis de la cartouche,
- le logement (18) présente un épaulement annulaire (20) prévue pour former, dans une position d'enfoncement ultime de la cartouche dans son logement (18), une butée de fin de course du corps de cartouche (10), de sorte qu'une arête vive (20a) dudit épaulement (20) vienne en appui au niveau de la base des dents élastiques (26), de tel sorte que, lorsqu'un seuil prédéterminé de poussée axialement exercée au niveau de la base des dents élastiques (26) par cette arête vive (20a) est atteint, les dents élastiques (26) se déforment de manière plastique et irréversible de façon à accroître leur inclinaison vers ladite seconde ouverture et à ne plus s'opposer au retrait de la cartouche hors du logement (18), et
- la section transversale du logement (18) est invariable depuis l'entrée du logement (18) jusqu'à l'épaulement annulaire (20) formant butée de fin de course du corps de cartouche (10).

2. Ensemble selon la revendication 1, avec une cartouche d'implantation, **caractérisée en ce que** le bouton-poussoir (8) possède une tête élargie de manière à disposer d'une surface de contact suffisante avec la bordure annulaire (18a) à l'entrée du logement (18).

3. Ensemble selon la revendication 1, **caractérisée en ce que** les dents élastiques (26) sont cambrées de manière à former un tronc de cône et fixées sur une extrémité en forme de tronc de cône (10a) du corps de cartouche (10), de manière à former un angle de débattement d'environ 15 à 20° entre les dents élastiques (26) et ladite extrémité en tronc de cône (10a) du corps de cartouche (10).

4. Ensemble selon l'une des revendications 1 à 3, **caractérisée en ce que** les dents élastiques (26) sont les dents d'une rondelle élastique (24) fixée, par exemple par encliquetage ou sertissage, sur le corps de cartouche (10).

5. Ensemble selon la revendication 4, **caractérisée en ce que** le corps de la cartouche (10) est réalisé en matière synthétique et **en ce que** la rondelle élastique (24) est métallique.

6. Platine munie d'au moins un ensemble selon l'une des revendications 1 à 5.

7. Vérin pneumatique, **caractérisé en ce qu'**il comporte au moins un ensemble selon l'une des revendications 1 à 6.

## Claims

1. An assembly for connecting a pipe (14) to an end of a conduit forming a housing (18), comprising a housing (18), an implantation cartridge for a pipe fitting intended to be placed in the housing (18), this cartridge including
- a body (10) of a general cylindrical shape, with a first opening connected to a conduit (28), and provided with elastic teeth (26), extending radially outwards, tilted relatively to a radial plane towards a second opening provided for introducing a pipe to be connected (14), and intended to be preferably positioned at the bottom of the housing (18); and
- an instantaneous connection fitting for connecting the pipe (14) to the cartridge, comprising an elastic ring (2), with teeth extending radially inwards, bearing against a shoulder made in the interior of the cartridge body (10), a ring (4) intended to maintain the elastic ring (2) in position, a seal gasket (6) for providing the seal between the outer surface of the pipe to be connected (14) and the inner surface of the cartridge body (10), and an axially mobile pushbutton (8) and intended to act on the teeth of the elastic ring (2) in order to be able to release a pipe (14) maintained in the connection fitting, **characterized in that**
- the entrance of the housing (18) has an annular border (18a) provided for forming, in the connection end position of the pipe (14), in an intermediate sunken-in position of the cartridge in its housing (18), an axial end-of-travel abutment of the pushbutton (8) so as to make the mounting of the fitting of the pipe (14) irreversible with regard to the cartridge,
- the housing (18) has an annular shoulder (20) provided for forming, in an ultimate sunken-in position of the cartridge in its housing (18), an axial end-of-travel abutment of the cartridge body (10), so that a sharp edge (20a) of said shoulder (20) will be supported at the base of the elastic teeth (26), so that, when a predetermined threshold of a thrust exerted axially at the base of the elastic teeth (26) by this sharp edge (20a) is reached, the elastic teeth (26) deform plastically and irreversibly so as to increase their tilt towards said second opening and to no longer oppose removal of the cartridge out of the housing (18), and
- the cross-section of the housing (18) is invariable from the entrance of the housing (18) up to the annular shoulder (20) forming an end-of-travel abutment of the cartridge body (10).

2. The assembly according to claim 1, with an implantation cartridge, **characterized in that** the pushbutton (8) has a widened head is so as to have sufficient contact surface area with the annular border (18a) at the entrance of the housing (18).

3. The assembly according to claim 1, **characterized in that** the elastic teeth (26) are arched so as to form a truncated cone and attached on a frusto-conical end (10a) of the cartridge body (10), so as to form a displacement angle from about 15 to 20° between the elastic teeth (26) and said frusto-conical end (10a) of the cartridge body (10).

4. The assembly according to one of claims 1 to 3, **characterized in that** the elastic teeth (26) are the teeth of an elastic washer (24) attached, for example by snap-fastening or crimping, on the cartridge body (10).

5. The assembly according to claim 4, **characterized in that** the body of the cartridge (10) is made in a synthetic material, and **in that** the elastic washer (24) is metal.

6. A plate provided with at least one assembly according to any of claims 1 to 5.

7. A pneumatic actuator, **characterized in that** it includes at least one assembly according to claims 1 to 6.

## Patentansprüche

1. Gruppe für den Anschluss eines Rohrs (14) an ein Ende einer Leitung, die eine Aufnahme (18) bildet, die umfasst: eine Aufnahme (18), einen Einbaueinsatz für einen Rohranschluss, der dazu bestimmt ist, in der Aufnahme (18) platziert zu sein, wobei dieser Einsatz umfasst
- einen allgemein zylindrisch geformten Körper (10) mit einer ersten, mit einer Leitung (28) verbundenen Öffnung, und ausgestattet mit elastischen Zähnen (26), die sich im Verhältnis zu einer radialen Ebene zu einer zweiten Öffnung, die zum Einführen eines anzuschließenden Rohrs (14) vorgesehen ist, radial geneigt nach außen erstrecken und dazu bestimmt sind, vorzugsweise auf dem Boden der Aufnahme (18) angeordnet zu sein, und
- einen Sofortanschluss, um das Rohr (14) an den Einsatz anzuschließen, der einen elastischen Ring (2) mit Zähnen, die sich radial nach innen erstrecken, wobei sie sich auf einem Absatz abstützen, der im Einsatzkörper (10) ausgebildet ist, eine Hülse (4), die dazu bestimmt ist, den elastischen Ring (2) in Position zu halten, eine Dichtung (6), um die Dichtigkeit zwischen der Außenfläche des anzuschließenden Rohrs (14) und der Innenfläche des Einsatzkörpers (10) zu gewährleisten und einen axial bewegbaren Druckknopf (8), der dazu bestimmt ist, auf die Zähne des elastischen Rings (2) zu wirken, um ein im Anschluss gehaltenes Rohr (14) freizugeben, umfasst, **dadurch gekennzeichnet, dass**
- der Eingang der Aufnahme (18) eine ringförmige Einfassung (18a) aufweist, die vorgesehen ist, um in Endverbindungsposition des Rohrs (14) in einer Zwischeneindringposition des Einsatzes in seine Aufnahme (18) einen axialen Endlagenanschlag des Druckknopfs (8) zu bilden, um die Montage des Anschlusses des Rohrs (14) gegenüber dem Einsatz unumkehrbar zu gestalten,
- die Aufnahme (18) einen ringförmigen Absatz (20) aufweist, der vorgesehen ist, um in einer Endeindringposition des Einsatzes in seine Aufnahme (18) einen Endlagenanschlag des Einsatzkörpers (10) derart zu bilden, dass sich eine scharfe Kante (20a) des Absatzes (20) auf Ebene der Basis der elastischen Zähne (26) derart abstützt, dass, wenn eine vorbestimmte Schwelle axial auf Ebene der Basis der elastischen Zähne (26) von dieser scharfen Kante (20a) ausgeübten Drucks erreicht ist, sich die elastischen Zähne (26) plastisch und unumkehrbar derart verformen, dass sich ihre Neigung in Richtung der zweiten Öffnung verstärkt und sie sich dem Entfernen des Einsatzes aus der Aufnahme (18) nicht mehr widersetzen, und
- der Querschnitt der Aufnahme (18) ab dem Eingang der Aufnahme (18) bis zum ringförmigen Absatz (20), der den Endlagenanschlag des Einsatzkörpers (10) bildet, invariabel ist.

2. Gruppe nach Anspruch 1 mit einem Einbaueinsatz, **dadurch gekennzeichnet, dass** der Druckknopf (8) einen Kopf besitzt, der derart erweitert ist, dass er über eine ausreichende Kontaktfläche mit der ringförmigen Einfassung (18a) am Eingang der Aufnahme (18) verfügt.

3. Gruppe nach Anspruch 1, **dadurch gekennzeichnet, dass** die elastischen Zähne (26) derart gebogen sind, dass sie einen Kegelstumpf bilden und auf einem kegelstumpfförmigen Ende (10a) des Einsatzkörpers (10) derart befestigt sind, dass sie einen Federwinkel von zirka 15 bis 20° zwischen den elastischen Zähnen (26) und dem kegelstumpfförmigen Ende (10a) des Einsatzkörpers (10) bilden.

4. Gruppe nach einem der Ansprüche 1 bis 3, **dadurch gekennzeichnet, dass** die elastischen Zähne (26) die Zähne einer elastischen Scheibe (24) sind, die zum Beispiel durch Einrasten oder Quetschen auf dem Einsatzkörper (10) befestigt ist.

5. Gruppe nach Anspruch 4, **dadurch gekennzeichnet, dass** der Einsatzkörper (10) aus synthetischem Werkstoff hergestellt ist und dass die elastische Scheibe (24) metallisch ist.

6. Platte, die mit mindestens einer Gruppe nach einem der Ansprüche 1 bis 5 ausgestattet ist.

7. Pneumatikzylinder, **dadurch gekennzeichnet, dass** er mindestens eine Gruppe nach einem der Ansprüche 1 bis 6 umfasst.
